# EUROPEAN PATENT SPECIFICATION

(11) **EP 1 588 929 B1**
(45) Date of publication and mention of the grant of the patent: **19.12.2007**
(21) Application number: 05103112.8
(22) Date of filing: 19.04.2005
(51) Int. Cl.: B62D 47/02, B62D 21/02

(54) **Subframe for buses with low-floor chassis and method for manufacturing such a subframe**
Karosserierahmen für Niederflurbus sowie Verfahren zu dessen Herstellung
Châssis pour autobus surbaissé et procédé pour sa fabrication

(30) Priority: 23.04.2004 SE 0401056
(43) Date of publication of application: 26.10.2005
(73) Proprietor: Scania CV AB (publ), 151 87 Södertälje (SE)
(72) Inventor: Svedjebratt, Malin, 124 63 Bandhagen (SE); Öhman, Rikard, 151 48 Södertälje (SE)
(74) Representative: Sjögren Paulsson, Stina

(56) References cited:
- WO-A-01/62576
- PATENT ABSTRACTS OF JAPAN vol. 2000, no. 22, 9 March 2001 (2001-03-09) -& JP 2001 122153 A (HINO MOTORS LTD), 8 May 2001 (2001-05-08)

## Description

### FIELD OF THE INVENTION AND STATE OF THE ART

The present invention relates to a subframe for buses with low-floor chassis according to the preamble of the attached claim 1, and a method for manufacturing such a subframe. Such a subframe is shown in document WO 01/62576 A1.

Subframe means a loadbearing frame structure fitted with driver's location, engine, driveline and wheel suspension.

Low-floor chassis means that the bus chassis is of little extent in the vertical direction, with the result that the bus floor is at a relatively low level relative to the ground surface. A low-floor chassis is mainly used in urban buses so that there is either a low floor throughout the bus or only in the forward and middle portions of the bus, ahead of and in line with the central door. The low floor facilitates boarding and alighting. In contrast, a tourist bus chassis has a high floor inside the bus to make room for large baggage spaces under the floor.

The subframe is part of the chassis frame structure and comprises longitudinal frame side-members and cross-members. In the case of a low-floor chassis, the members constituting the subframe extend in substantially one plane. Thus, for example, no cross-members should rest on longitudinal members or vice versa.

The members are normally fixed together by welding, although other forms of connection, e.g. threaded connections, are also conceivable.

The bus bodywork is normally fastened to the subframe cross-members.

A characteristic of such subframes for buses with low-floor chassis is that bodybuilders, i.e. those who place the bodywork on the chassis, have a variety of different wishes as regards door positioning, choice of seats, number of seats etc., with the result that almost every bus requires an individual solution, which means that subframes have at present to be provided in a large range with many variants. This entails having to have many articles and systems, with small volumes per product and difficulty in increasing the volumes. The result is less rational manufacture and little possibility of automation, with consequently high manufacturing costs and low profitability. The relating stockholding and transport are expensive. Customers also have to wait a relatively long time for product change in response to changing customer demand, owing to long development times. It would therefore be desirable to provide a more flexible subframe which goes a long way to solving the abovementioned problems.

### SUMMARY OF THE INVENTION

The object of the present invention is to indicate such a solution to the abovementioned problems.

This object is achieved according to the invention by providing a subframe according to the attached claim 1.

The subframe being made up of at least said three subframe modules fixed together creates the possibility of reduced lead times and less expensive production, stockholding and transport, short development times and quicker product change in response to changing customer demand. Fastening the modules to other modules via fixed interfaces makes it possible for a module to undergo development work and be modified without entailing any of the other modules in the subframe having to be altered, since despite the modifications the fixed interface enables the module concerned to fit together with the rest of the subframe. All frames can thus be easily updated if so desired. Lead times in design work can therefore be markedly shortened. Fewer drawings are needed and the drawing work involved in changes is considerably simplified. The division into modules makes it possible to automate production and build up stocks of standardised components, thereby shortening lead times and reducing manufacturing costs.

The important point about the division into modules is that for upgrading to be possible the function which is to be upgraded should not be spread over a number of modules. As regards both the forward subframe module and the rear subframe module, the outer interface is fixed and the development potential is very low, so the likelihood of any development in these two portions of the frame is very slight.

As regards the door position module, it is of course not necessary for the door to be arranged on the bus for both boarding and alighting, even if this is possible, since it may very well be that only alighting or only boarding is intended to take place via the door aperture concerned.

Modular division of frames of heavy motor vehicles is previously known, e.g. from DE 4322717 and EP 1 318 064, but neither case refers to any subframe for buses with low-floor chassis, in fact the modules concerned are larger and a single module does in principle constitute a whole subframe. Moreover, in both cases, the module concerned comprises longitudinal members arranged in different planes, making a low floor impossible.

WO 03/053770 refers to a truck frame structure assembled by using modules, but with the frame cross-members placed on top of the longitudinal members, resulting in a high structure.

Thus no prior subframe for buses with low-floor chassis made up of a number of modules is known.

According to one embodiment of the invention, the subframe comprises at least one module of a fourth type, viz. an inset frame module with longitudinal members and at least one cross-member which connects said longitudinal members, and such an inset frame module is fastened via fixed interfaces to longitudinal members and/or cross-members of other subframe modules in order to help to define the length of the subframe and the location in the latter's length direction of the door position module. Using such an inset frame module makes it possible to vary the location of the door position module and hence of the bus door without entailing any change to the other subframe modules of the subframe, thereby catering for a large range of variation as regards door location and axle spacing in buses by using said four different types of modules, without entailing any changes to these latter.

According to another embodiment of the invention, the inset frame module comprises a cross-member and two longitudinal members which run in the same direction as one another and are each connected to the cross-member at substantially the same distance from their respective ends of the cross-member. Such an inset frame module can easily be connected to other such inset frame modules or other subframe modules either by the cross-member being connected to ends of such longitudinal members or by the longitudinal members being connected to a cross-member of another subframe module. Turning the inset frame module so that its longitudinal members point forwards or rearwards enables easy adaptation to the layout of adjacent subframe modules and thereby makes it easy to achieve said connections, e.g. by welding.

According to another embodiment of the invention, the door position frame is designed to be fastenable to adjacent subframe modules at two locations situated rotationally at 180° to one another so that the door position module can be used irrespective of whether the door is situated on the left or right side of the bus. This can be achieved by the door position module being mirror-image symmetrical relative to a transverse vertical plane in the case of a subframe which extends horizontally. There is thus no need for different door position modules for doors situated on different sides of the bus, thereby further enhancing the aforesaid advantages of the invention.

According to another embodiment of the invention, the subframe comprises a module of a fifth type, viz. a door access module designed to be fastened via fixed interfaces to longitudinal members and/or cross-members of a said door position module. The door access is the portion of the subframe which has the greatest development potential, so it is advantageous that it be a separate module. Its layout depends on whether it has to cater for double or single doors and, in some cases, on whether there is a wheelchair ramp.

It is advantageous that the members of one and the same module be fastened together by welding, although other forms of connection are possible. The same also applies to the mutual fastening of the constituent modules of the subframe. In some cases, however, other forms of connection, e.g. threaded connections, may be appropriate.

The invention also relates to a modular system for constructing a subframe for buses with low-floor chassis according to the attached independent claims which relate to such a modular system. The function of this and what is achieved by it are indicated with all desirable clarity by the description above of the subframe according to the invention and its various embodiments. Thus such a modular system with a small number of different modules can be used to construct a great variety of subframes, and development work with a view to producing new subframes adapted to special requirements of some customers will be efficient, since such development work can be applied specifically to the particular module in which a change has to be made.

The invention also relates to a method for manufacturing a subframe for buses with low-floor chassis according to the attached independent method claim. Such a method can be used for assembling very quickly a variety of subframe configurations.

The invention also relates to a bus with low-floor chassis comprising a subframe according to the invention.

Other advantages and advantageous features of the invention are indicated by the description set out below and other dependent claims.

### BRIEF DESCRIPTION OF THE DRAWINGS

An embodiment cited by way of example of the invention is described below with reference to the attached drawings, in which:
- Fig. 1: is a simplified perspective view of a low-floor chassis and certain items connected to it, e.g. wheel housings, of a bus with a subframe according to an embodiment of the invention, and in this and the other drawings the ordinary direction of movement of the bus is to the left,
- Fig. 2: is a perspective view of the embodiment depicted in Fig. 1 of the subframe according to the invention,
- Fig. 3: is a perspective view of a forward subframe module forming part of the subframe according to the invention,
- Fig. 4: depicts the subframe according to Fig. 2 as seen from above, with the forward subframe module distinguished by hatching,
- Fig. 5: is a view corresponding to Fig. 3 of a door position module forming part of the subframe,
- Fig. 6: is a view corresponding to Fig. 4, with the door position module according to Fig. 5 distinguished by hatching,
- Fig. 7: is a view corresponding to Fig. 3 of a rear subframe module forming part of the subframe,
- Fig. 8: is a view of the rear portion of the subframe according to Fig. 4 as seen from above, with the rear subframe module according to Fig. 7 distinguished by hatching,
- Fig. 9: is a view corresponding to Fig. 3 of an inset frame module forming part of the subframe according to Fig. 2,
- Fig. 10: is a view corresponding to Fig. 4, with inset frame modules according to Fig. 9 forming part of the subframe and distinguished by hatching.
- Fig. 11 and 12: are views corresponding to Fig. 3 of two different door access modules which may form part of a subframe according to the invention, and
- Fig. 13: is a view corresponding to Fig. 4, with the door access module according to Fig. 11 distinguished by hatching.

### DETAILED DESCRIPTION OF EMBODIMENTS OF THE INVENTION

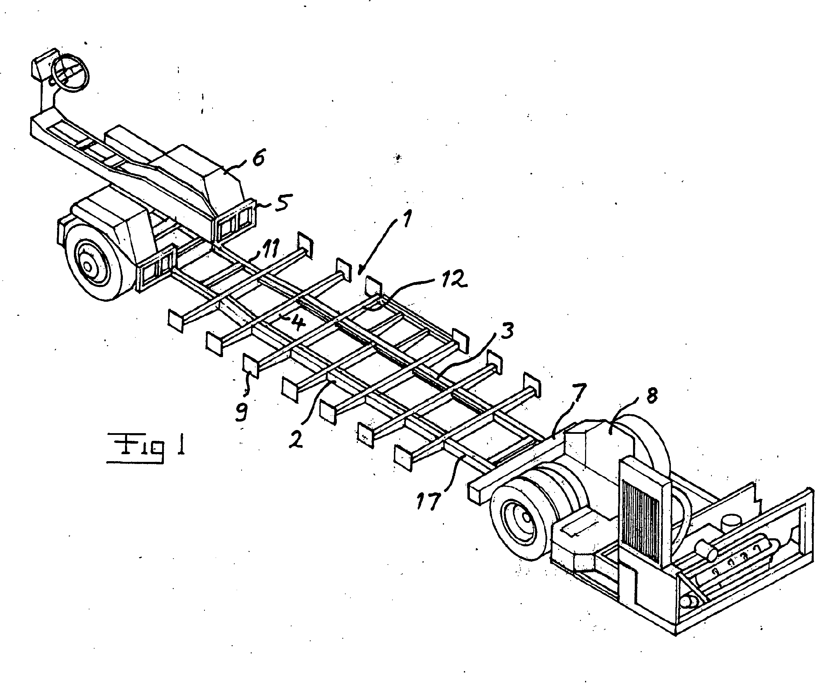

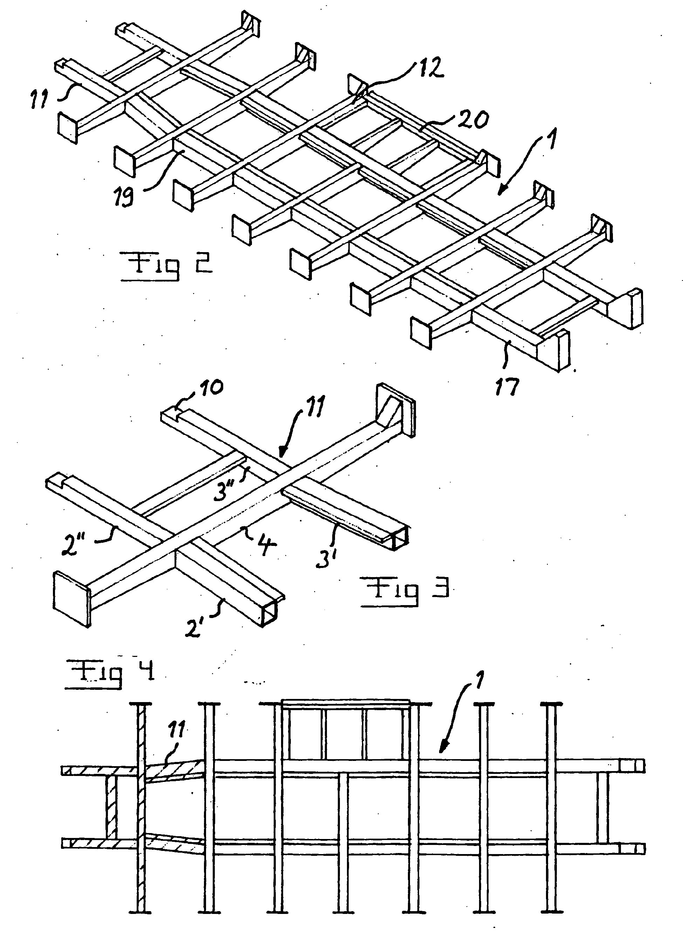

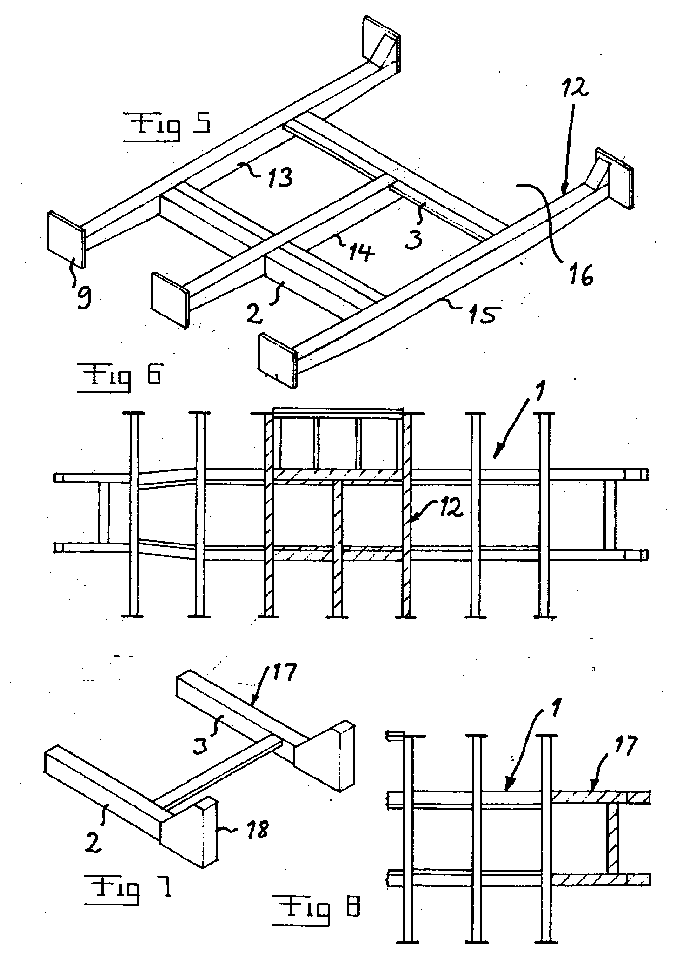

Fig. 1 illustrates very schematically part of a bus with low-floor chassis provided with a subframe 1 according to the present invention. The subframe 1 mainly comprises longitudinal members 2, 3 and, in substantially the same plane as these latter, cross-members 4 which extend substantially perpendicular to, and are fixed to, said longitudinal members. The subframe comprises at the front a forward frame module 5 fixed to a front wheel housing 6 of the bus, and at the rear a rear frame module 7 fixed to a rear wheel housing 8. The subframe might also either be a forward subframe of a so-called articulated bus and in that case have its rear end fastened at an articulation, or be the rear subframe of such an articulated bus and in that case have its forward end fastened at the articulation.

The ribs which constitute the skeleton of the bodywork have to be fastened to the subframe, and this is effected via fastening plates 9 situated laterally at the ends of the cross-members 4. The length of the cross-members defines the width of the subframe and hence indirectly the width of the bus, which at present is either 2500 mm or 2550 mm, so different sets of modules are required for different bus widths.

This subframe is constructed by five different types of subframe modules being fastened together at fixed interfaces by being fastened to longitudinal members 2, 3 and/or cross-members 4 of adjacent subframe modules. The modules are with advantage fastened together by welding, but threaded connections would also be possible, subject to solving any vibration problems associated with such connections.

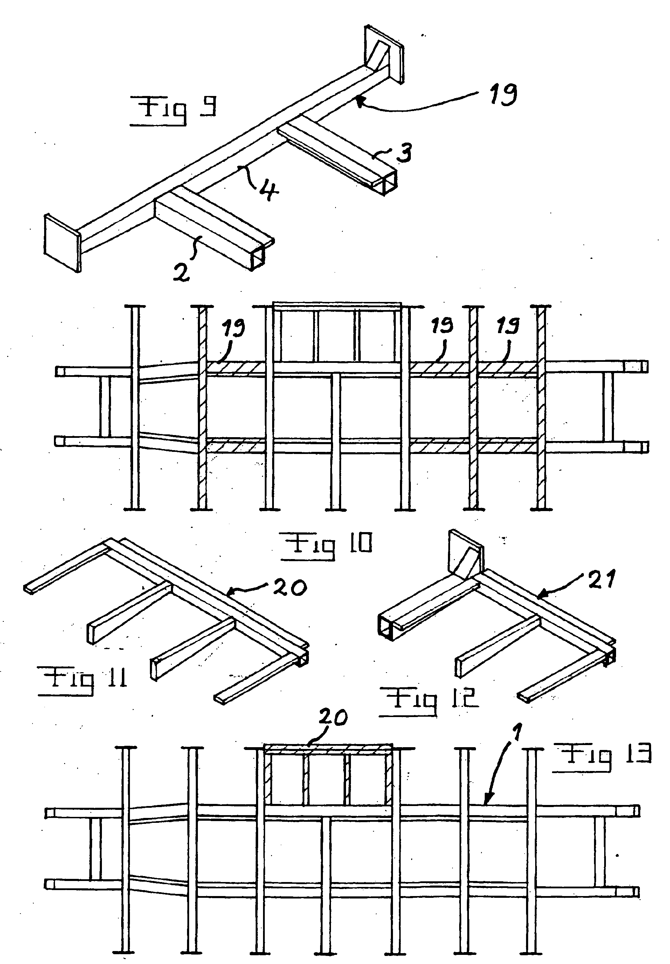

Fig. 3 depicts the forward subframe module 11 which comprises a cross-member 4 and longitudinal members 2', 2", 3', 3" which are connected to, and protrude both forwards and rearwards from, said cross-member. In this case the members are fastened together by welded connections. The front end of the forward subframe module comprises schematically depicted means 10 in the form of notches for fastening this module to a forward frame module (see ref. 5 in Fig. 1) or a said articulation of an articulated bus. The rear ends of the longitudinal members 2', 3' are intended to be fixed to a cross-member of another module of the subframe. The interfaces which this forward subframe module forms forwards and rearwards are fixed, which means that this forward subframe module can be varied in other respects as desired without such variations entailing any change to any other portion of the subframe. The likelihood of any development being effected in this particular portion of the subframe is nevertheless slight. Fig. 4 shows the forward subframe module according to Fig. 3 incorporated in the subframe by being fixed to an inset frame module which is described below with reference to Figs. 9 and 10. The length of the forward subframe module 11 has to be adapted to wheel housings with different spacings, normally 1280 mm or 1330 mm, between the members defining them, so that the distance between the wheel shafts can be kept constant irrespective of the spacing of these members.

Fig. 5 depicts a door position module 12 which forms part of the subframe according to the invention and is designed to define a location for applying a door for boarding and alighting from the bus. This module comprises longitudinal members 2, 3 and three cross-members 13-15 arranged at mutual spacing in the longitudinal direction, and the two of the latter which are situated furthest from one another extend across the whole width of the subframe, whereas the middle cross-member 14 has one end ending at a longitudinal member 3 so that a space 16 for a door or a door access is formed between the furthest apart, 13, 15, of the three cross-members and the last-named longitudinal member 3. The door position module is rotatable through 180° about a vertical axis to allow the space 16 and hence a door or door access to be situated optionally on the right or left as seen in the direction of movement of the bus. Here this is achieved by the door position module being mirror-image symmetrical relative to a transverse vertical plane in the case of a subframe which extends horizontally, i.e. a vertical plane which bissects the centrally situated cross-member 14. To accommodate the whole function of the door, the same module also comprises the cross-members 13, 15 on their respective sides of the door access in the module, in cases where the fixing points for the door are situated there. It is important from the technical development point of view that a function which is likely to be subject to changes should not be spread over a number of modules.

Fig. 6 shows the door position module fastened via its cross-members 13, 15 to longitudinal members of other modules of the subframe of a bus with door access on the right.

Fig. 7 depicts a rear subframe module 17 comprising two longitudinal members 2, 3 with, at one of these latter's respective ends, schematically depicted means 18 for fastening this module and hence the subframe to a rear frame module (see ref. 7 in Fig. 1) or to an articulation of a so-called articulated bus. The forward ends of the two longitudinal members 2, 3 are fastened to a cross-member 4 of another subframe module, as illustrated in Fig. 8.

Fig. 9 depicts an inset frame module 19 with a cross-member 4 and longitudinal members 2, 3 which run in the same direction as one another and are each connected to the cross-member at substantially the same distance from their respective ends of the cross-member. This inset frame module can be rotated through 180° so that the longitudinal members 2, 3 may point forwards or rearwards from the cross-member 4 depending on what is required in the particular case. Thus such an inset frame module may be fastened on each side of a door position module, as depicted in Fig. 10. The length of the members 2, 3 is such that a desired fixed spacing, usually 750 mm, is maintained between consecutive cross-members. Such an inset frame module can be used to vary the length of the subframe and hence the spacing between the wheel shafts of the bus by incorporating an appropriate number of such inset frame modules in the subframe, resulting in a correspondingly wide range of choice as regards the location of the door along the length of the bus. The embodiment depicted in the drawings comprises three inset frame modules, two of them with the longitudinal members directed forwards and one with them directed rearwards, as indicated by Fig. 10.

Figs. 11 and 12 depict the layout of two different door access modules 20, 21 forming part of the subframe according to the invention and intended respectively for double-door and single-door buses. The door access of a bus is the portion of the subframe which has the greatest development potential, so it needs to be a separate module. It has fixed interfaces relative to the door position module 12 and, subject to taking these interfaces into account, it can be varied freely for adaptation to wheelchair ramps and the like. The door access module is fastened to the cross-members 13, 15 of the door position module and to a longitudinal member 3 of the latter. Fig. 13 shows the location of the door access module 20 in the subframe according to the invention.

The invention is of course in no way limited to the embodiment described above, since a multiplicity of possibilities for modifications thereof are likely to be obvious to a specialist in the field without thereby deviating from the basic concept of the invention as defined in the attached claims.

For example, it would theoretically be possible in the case of an extremely short bus to connect the forward and rear subframe modules directly to the door position module.

The number of longitudinal members of the subframe module might be more than two if certain applications so required.

The layout in the drawings of the various constituent members of the modules is merely one of many possible examples. The same also applies to how they are connected together.

The subframe is likewise capable of various other adaptations as regards, for example, means of assembling it to the bus bodywork, including elements for stiffening, vibration damping and the like.

The forward subframe module might have no cross-members, whereas the rear one might have one or more cross-members.

It should be noted that the term "articulation" used in this description is to be construed as comprising the subframe being fastened to a so-called centre-axle of an articulated bus or indirectly thereto via some element or device.

## Claims

1. A subframe for buses with low-floor chassis, intended to be fastened at the front either via a forward frame module (5) to a forward wheel housing of a bus or to an articulation of a so-called articulated bus, and at the rear either via a rear frame module (7) to a rear wheel housing of a bus or to an articulation of a so-called articulated bus, said subframe being made up of longitudinal members (2, 3) and of cross-members (4) which are situated in substantially the same plane as, extend substantially perpendicular to and are fixed to said longitudinal members, **characterised in that** the subframe comprises at least three subframe modules fixed together, viz.,
• a forward subframe module (11) with longitudinal members and means (10) for fastening this module to said forward frame module or articulation,
• a door position module (12) with longitudinal members and cross-members which connect said longitudinal members and are mutually arranged to define a location for applying a door for boarding and alighting from the bus.
• a rear subframe module (17) with longitudinal members and means (18) for fastening this module to said rear frame module or articulation,
and that each of these three subframe modules is fastened via fixed interfaces to longitudinal members and/or cross-members of other subframe modules of the subframe.

2. A subframe according to claim 1, **characterised in that** it comprises at least one module of a fourth type, viz. an inset frame module (19) with longitudinal members (2, 3) and at least one cross-member (4) which connects said longitudinal members, and that such an inset frame module is fastened via fixed interfaces to longitudinal members and/or cross-members of other subframe modules to help to define the length of the subframe and the location in the latter's longitudinal direction of the door position module (12).

3. A subframe according to claim 2, **characterised in that** the inset frame module (19) comprises a cross-member (4) and two longitudinal members (2, 3) which run in the same direction as one another and are each fastened to the cross-member at substantially the same distance from their respective ends of the cross-member.

4. A subframe according to any one of claims 1-3, **characterised in that** the door position module (12) is designed to be fastenable to adjacent subframe modules at two locations situated rotationally at 180° to one another in the subframe plane to enable the door position module to be used irrespective of whether the door is situated on the left or the right side of the bus.

5. A subframe according to claim 4, **characterised in that** the door position module (12) is mirror-image symmetrical relative to a transverse vertical plane of a subframe which extends horizontally.

6. A subframe according to any one of the foregoing claims, **characterised in that** the forward subframe module (11) comprises a cross-member (4) and longitudinal members (2', 2", 3', 3") which are connected to said cross-member and protrude from it both forwards and rearwards.

7. A subframe according to any one of the foregoing claims, **characterised in that** the door position module (12) comprises three cross-members (13-15) mutually spaced in the longitudinal direction along two longitudinal members, that the two cross-members situated furthest from one another (13, 15) have mutually opposite end portions which each extend past their respective longitudinal member in order to define the width of the subframe, and that the middle cross-member (14) has one of its ends ending level with the nearby ends of the other two cross-members and has its other end ending at the longitudinal member (3) situated furthest away from the first-named end, thereby forming a space (16) for a door or a door access between the two furthest apart of said three cross-members and the last-mentioned longitudinal member.

8. A subframe according to any one of the foregoing claims, **characterised in that** it comprises a module of a fifth type, viz. a door access module (20, 21) designed to be fastened via fixed interfaces to longitudinal members and/or cross-members of a said door position module (12).

9. A subframe according to any one of the foregoing claims, **characterised in that** the members (2, 3, 4, 13-15) fixed together within one and the same module are welded firmly together.

10. A subframe according to any one of the foregoing claims, **characterised in that** said constituent modules (11, 12, 17, 19, 20, 21) of the subframe are fastened together by welded or threaded connections.

11. A modular system for constructing a subframe for buses with low-floor chassis, intended to be fastened at the front either via a forward frame module (5) to a forward wheel housing of a bus or to an articulation of a so-called articulated bus, and at the rear either via a rear frame module (7) to a rear wheel housing of a bus or to an articulation of a so-called articulated bus, **characterised in that** it comprises at least three subframe modules viz.:
• a forward subframe module (11) with longitudinal members and means (10) for fastening this module to said forward frame module or articulation,
• a door position module (12) with longitudinal members and cross-members which connect said longitudinal members and are mutually arranged to define a location for applying a door for boarding and alighting from the bus.
• a rear subframe module (17) with longitudinal members and means (18) for fastening this module to said rear frame module or articulation,
and that each of these three subframe modules is designed to be fastened via fixed interfaces to longitudinal members and/or cross-members of other subframe modules in order to form said subframe.

12. A modular system according to claim 11, **characterised in that** it also comprises at least one module of a fourth type, viz. an inset frame module (19) with longitudinal members (2, 3) and at least one cross-member (4) connecting said longitudinal members, and that such an inset frame module is designed to be fastened via fixed interfaces to longitudinal members and/or cross-members of other subframe modules in order to help to define the length of the subframe and the location in the latter's longitudinal direction of the door position module (12).

13. A modular system according to claim 11 or 12, **characterised in that** it comprises at least one module of a fifth type, viz. a door access module (20, 21) designed to be fastened via fixed interfaces to longitudinal members and/or cross-members of the door position module (12).

14. A method for making a subframe for buses with low-floor chassis, intended to be fastened at the front either via a forward frame module (5) to a forward wheel housing of a bus or to an articulation of a so-called articulated bus, and at the rear either via a rear frame module (7) to a rear wheel housing of a bus or to an articulation of a so-called articulated bus, said subframe being made up of longitudinal members and of cross-members which are situated in substantially the same plane as, extend substantially perpendicular to and are fixed to said longitudinal members, **characterised in that** the subframe is formed by fixing together at least three subframe modules, viz.:
• a forward subframe module (11) with longitudinal members and means (10) for fastening this module to said forward frame module or articulation,
• a door position module (12) with longitudinal members and cross-members which connect said longitudinal members and are mutually arranged to define a location for applying a door for boarding and alighting from the bus.
• a rear subframe module (17) with longitudinal members and means (18) for fastening this module to said rear frame module or articulation, by each of these three subframe modules being fastened via fixed interfaces to longitudinal members and/or cross-members of other subframe modules of the subframe.

15. A method according to claim 14, **characterised in that** at least one module of a fourth type, viz. an inset frame module (19) with longitudinal members (2, 3) and at least one cross-member (4) which connects said longitudinal members, is fastened via fixed interfaces to longitudinal members and/or cross-members of other subframe modules to help to define the length of the subframe and the location in the latter's longitudinal direction of the door position module (12).

16. A method according to claim 14 or 15, **characterised in that** a module of a fifth type, viz. a door access module (20, 21) is fastened via fixed interfaces to longitudinal members and/or cross-members of the door position module (12).

17. A bus with low-floor chassis comprising a subframe (1) according to any one of claims 1-10.

## Patentansprüche

1. Hilfsrahmen für Busse mit Niederflurfahrgestell, der an der Vorderseite entweder über ein vorderes Rahmenmodul (5) an einem vorderen Radhaus eines Busses befestigt werden soll oder an einem Gelenk eines sogenannten Gelenkbusses, und an der Rückseite entweder über ein hinteres Rahmenmodul (7) an einem hinteren Radhaus eines Busses oder an einem Gelenk eines sogenannten Gelenkbusses, wobei sich der Hilfsrahmen aus längslaufenden Elementen (2, 3) und Quer-Elementen (4) zusammensetzt, die im Wesentlichen in der selben Ebene angeordnet sind, sich im Wesentlichen senkrecht zu den längslaufenden Elementen erstrecken und mit diesen fest verbunden sind,
**dadurch gekennzeichnet, dass** der Hilfsrahmen wenigstens drei Hilfsrahmenmodule umfasst, die miteinander fest verbunden sind, nämlich:
- ein vorderes Hilfsrahmenmodul (11) mit längslaufenden Elementen und Mitteln (10) zur Befestigung dieses Moduls an dem vorderen Rahmenmodul oder Gelenk,
- ein Türlagermodul (12) mit längslaufenden Elementen und Quer-Elementen, die die längslaufenden Elemente verbinden und zueinander angeordnet sind, um eine Stelle zum Anbringen einer Tür zum Einsteigen und Aussteigen aus dem Bus zu definieren,
- ein rückwärtiges Hilfsrahmenmodul (17) mit längslaufenden Elementen und Mitteln (18) zum Befestigen dieses Moduls an dem hinteren Rahmenmodul oder Gelenk,
und das jedes dieser drei Hilfsrahmenmodule über fest verbundene Zwischenstücke an den längslaufenden Elementen und/oder den Quer-Elementen anderer Hilfsrahmenmodule des Hilfsrahmens befestigt ist.

2. Hilfsrahmen nach Anspruch 1,
**dadurch gekennzeichnet, dass** er wenigstens ein Modul eines vierten Typs aufweist, nämlich ein Einsatzrahmenmodul (19) mit längslaufenden Elementen (2, 3) und wenigstens einem Quer-Element (4), das die längslaufenden Elemente verbindet, und (**dadurch**), dass ein solches Einsatzrahmenmodul über fest verbundene Zwischenstücke an den längslaufenden Elementen und/oder den Quer-Elementen anderer Hilfsrahmenmodule befestigt ist, um dabei behilflich zu sein, die Länge des Hilfsrahmens und den Einbauort In der Längsrichtung des letzteren des Türlagermoduls (12) zu definieren.

3. Hilfsrahmen nach Anspruch 2,
**dadurch gekennzeichnet, dass** das Einsatzrahmenmodul (19) ein Quer-Element (4) und zwei längslaufende Elemente (2, 3) umfasst, die in der selben Richtung verlaufen wie das jeweils andere und die jeweils an dem Quer-Element In dem im Wesentlichen gleichen Abstand von ihren jeweiligen Enden des Quer-Elements befestigt sind.

4. Hilfsrahmen nach einem der Ansprüche 1 bis 3,
**dadurch gekennzeichnet, dass** das Türlagermodul (12) ausgebildet ist, um an gegenüberliegenden Hilfsrahmenmodulen an zwei Stellen befestigbar zu sein, die um 180° zueinander gedreht in der Hilfsrahmenebene angeordnet sind, um dem Türlagermodul zu ermöglichen, unabhängig davon verwendet zu werden, ob die Tür auf der linken oder der rechten Seite des Busses angeordnet ist.

5. Hilfsrahmen nach Anspruch 4,
**dadurch gekennzeichnet, dass** das Türlagermodul (12) spiegelbildlich symmetrisch bezüglich einer querverlaufenden vertikalen Ebene eines Hilfsrahmens ist, der sich horizontal erstreckt.

6. Hilfsrahmen nach einem der vorhergehenden Ansprüche,
**dadurch gekennzeichnet, dass** das vordere Hilfsrahmenmodul (11) ein Quer-Element (4) und längslaufende Elemente (2', 2", 3', 3") aufweist, die mit dem Quer-Element verbunden sind und davon sowohl nach vorne als auch nach hinten vorstehen.

7. Hilfsrahmen nach einem der vorhergehenden Ansprüche,
**dadurch gekennzeichnet, dass** das Türlagermodul (12) drei Quer-Elemente (13-15) aufweist, die voneinander in der Längsrichtung entlang zweier längslaufender Elemente beabstandet sind, dass die zwei Quer-Elemente, die am weitesten voneinander angeordnet sind (13, 15), zueinander entgegengesetzte Endabschnitte besitzen, die sich jeweils über ihr jeweiliges längslaufendes Element hinaus erstrecken, um die Breite des Hilfsrahmens zu definieren, und dass eines der Enden des mittleren Quer-Elements (14) mit den benachbarten Enden der anderen zwei Quer-Elemente bündig endet und sein anderes Ende mit dem längslaufenden Element (3) abschließt, das am weitesten entfernt von dem erstgenannten Ende angeordnet ist, wobei **dadurch** ein Raum (16) für eine Tür oder einen Türzugang zwischen den beiden entferntesten der drei Quer-Elemente und dem letztgenannten längslaufenden Element gebildet ist.

8. Hilfsrahmen nach einem der vorhergehenden Ansprüche,
**dadurch gekennzeichnet, dass** er ein Modul eines fünften Typs aufweist, nämlich ein Türzugangsmodul (20, 21), das ausgebildet ist, um über fest verbundene Zwischenstücke an längslaufenden Elementen und/oder Quer-Elementen des Türlagermoduls (12) befestigt zu werden.

9. Hilfsrahmen nach einem der vorhergehenden Ansprüche,
**dadurch gekennzeichnet, dass** die Elemente (2, 3, 4, 13-15), die miteinander zu ein und demselben Modul fest verbunden sind, fest miteinander verschweißt sind.

10. Hilfsrahmen nach einem der vorhergehenden Ansprüche,
**dadurch gekennzeichnet, dass** die einzelnen Module (11, 12, 17, 19, 20, 21) des Hilfsrahmens aneinander mittels Schweiß- oder Schraubverbindungen befestigt sind.

11. Modulares System zum Zusammenstellen eines Hilfsrahmens für Busse mit Niederflurfahrgestell, der an der Vorderseite entweder über ein vorderes Rahmenmodul (5) an einem vorderen Radhaus eines Busses befestigt werden soll oder an einem Gelenk eines sogenannten Gelenkbusses, und an der Rückseite entweder über ein hinteres Rahmenmodul (7) an einem hinteren Radhaus eines Busses oder an einem Gelenk eines sogenannten Gelenkbusses befestigt werden soll,
**dadurch gekennzeichnet, dass** der Hilfsrahmen wenigstens drei Hilfsrahmenmodule umfasst, nämlich:
- ein vorderes Hilfsrahmenmodul (11) mit längslaufenden Elementen und Mitteln (10) zur Befestigung dieses Moduls an dem vorderen Rahmenmodul oder Gelenk,
- ein Türlagermodul (12) mit längslaufenden Elementen und Quer-Elementen, die die längslaufenden Elemente verbinden und zueinander angeordnet sind, um eine Stelle zum Anbringen einer Tür zum Einsteigen und Aussteigen aus dem Bus zu definieren,
- ein rückwärtiges Hilfsrahmenmodul (17) mit längslaufenden Elementen und Mitteln (18) zum Befestigen dieses Moduls an dem hinteren Rahmenmodul oder Gelenk,
und dass jedes dieser drei Hilfsrahmenmodule ausgelegt ist, um über fest verbundene Zwischenstücke an den längslaufenden Elementen und/oder den Quer-Elementen anderer Hilfsrahmenmodule befestigt zu werden, um den Hilfsrahmen zu bilden.

12. Modulares System nach Anspruch 11,
**dadurch gekennzeichnet, dass** es wenigstens ein Modul eines vierten Typs aufweist, nämlich ein Einsatzrahmenmodul (19) mit längslaufenden Elementen (2, 3) und wenigstens einem Quer-Element (4), das die längslaufenden Elemente verbindet, und dass ein solches Einsatzrahmenmodul ausgebildet ist, um über fest verbundene Zwischenstücke an den längslaufenden Elementen und/oder den Quer-Elementen anderer Hilfsrahmenmodule befestigt zu werden, um dabei behilflich zu sein, die Länge des Hilfsrahmens und den Einbauort in der Längsrichtung des letzteren des Türlagermoduls (12) zu definieren.

13. Modulares System nach Anspruch 11 oder 12,
**dadurch gekennzeichnet, dass** es wenigstens ein Modul eines fünften Typs aufweist, nämlich ein Türzugangsmodul (20, 21), das ausgebildet ist, um über fest verbundene Zwischenstücke an längslaufenden Elementen und/oder Quer-Elementen des Türlagermoduls (12) befestigt zu werden.

14. Verfahren zum Herstellen eines Hilfsrahmens für Busse mit Niederflurfahrgestell, der an der Vorderseite entweder über ein vorderes Rahmenmodul (5) an einem vorderen Radhaus eines Busses befestigt werden soll oder an einem Gelenk eines sogenannten Gelenkbusses, und an der Rückseite entweder über ein hinteres Rahmenmodul (7) an einem hinteren Radhaus eines Busses oder an einem Gelenk eines sogenannten Gelenkbusses befestigt werden soll, wobei sich der Hilfsrahmen aus längslaufenden Elementen und Quer-Elementen zusammensetzt, die im Wesentlichen in der selben Ebene angeordnet sind, sich im Wesentlichen senkrecht zu den längslaufenden Elementen erstrecken und mit diesen fest verbunden sind,
**dadurch gekennzeichnet, dass** der Hilfsrahmen wenigstens drei Hilfsrahmenmodule umfasst, die miteinander fest verbunden sind, nämlich:
- ein vorderes Hilfsrahmenmodul (11) mit längslaufenden Elementen und Mitteln (10) zur Befestigung dieses Moduls an dem vorderen Rahmenmodul oder Gelenk,
- ein Türlagermodul (12) mit längslaufenden Elementen und Quer-Elementen, die die längslaufenden Elemente verbinden und zueinander angeordnet sind, um eine Stelle zum Anbringen einer Tür zum Einsteigen und Aussteigen aus dem Bus zu definieren,
- ein rückwärtiges Hilfsrahmenmodul (17) mit längslaufenden Elementen und Mitteln (18) zum Befestigen dieses Moduls an dem hinteren Rahmenmodul oder Gelenk, der durch jedes dieser drei Hilfsrahmenmodule über fest verbundene Zwischenstücke an den längslaufenden Elementen und/oder den Quer-Elementen anderer Hilfsrahmenmodule des Hilfsrahmens befestigt ist.

15. Verfahren nach Anspruch 14,
**dadurch gekennzeichnet, dass** wenigstens ein Modul eines vierten Typs, nämlich ein Einsatzrahmenmodul (19) mit längslaufenden Elementen (2, 3) und wenigstens einem Quer-Element (4), das die längslaufenden Elemente verbindet, über fest verbundene Zwischenstücke an den längslaufenden Elementen und/oder den Quer-Elementen anderer Hilfsrahmenmodule befestigt ist, um dabei behilflich zu sein, die Länge des Hilfsrahmens und den Einbauort in der Längsrichtung des letzteren des Türlagermoduls (12) zu definieren.

16. Verfahren nach Anspruch 14 oder 15,
**dadurch gekennzeichnet, dass** ein Modul eines fünften Typs, nämlich ein Türzugangsmodul (20, 21) über fest verbundene Zwischenstücke an längslaufenden Elementen und/oder Quer-Elementen des Türlagermoduls (12) befestigt ist.

17. Bus mit Niederflurfahrgestellt, der einen Hilfsrahmen (1) nach einem der vorhergehenden Ansprüche 1 bis 10 umfasst.

## Revendications

1. Sous-châssis pour autobus avec un châssis surbaissé, destiné à être fixé à l'avant soit par l'intermédiaire d'un module de châssis avant (5) à un carter de roue avant d'un autobus ou à une articulation d'un autobus dit articulé et à l'arrière, soit par l'intermédiaire d'un module de châssis arrière (7) à un carter de roue arrière d'un autobus ou à une articulation d'un autobus dit articulé, ledit sous-châssis étant constitué d'éléments longitudinaux (2, 3) et de traverses (4) qui sont situées sensiblement dans le même plan, s'étendent sensiblement perpendiculairement et sont fixées auxdits éléments longitudinaux, **caractérisé en ce que** le sous-châssis comprend au moins trois modules de sous-châssis fixés conjointement, à savoir :
• un module de sous-châssis avant avec des éléments longitudinaux et des moyens (10) pour fixer ce module audit module de châssis avant ou articulation,
• un module de position de porte (12) avec des éléments longitudinaux et des traverses qui relient lesdits éléments longitudinaux et sont mutuellement agencés pour définir un emplacement pour appliquer une porte pour la montée et la descente à partir de l'autobus,
• un module de sous-châssis arrière (17) avec des éléments longitudinaux et des moyens (18) pour fixer ce module audit module de châssis arrière ou articulation,
et **en ce que** chacun de ces trois modules de sous-châssis est fixé par l'intermédiaire d'interfaces fixes aux éléments longitudinaux et/ou traverses d'autres modules de sous-châssis du sous-châssis.

2. Sous-châssis selon la revendication 1, **caractérisé en ce qu'**il comprend au moins un module d'un quatrième type, à savoir un module de châssis inséré (19) avec des éléments longitudinaux (2, 3) et au moins une traverse (4) qui relie lesdits éléments longitudinaux et **en ce qu'**un tel module de châssis inséré est fixé par l'intermédiaire d'interfaces fixes aux éléments longitudinaux et/ou traverses des autres modules de sous-châssis pour aider à définir la longueur du sous-châssis et l'emplacement dans la direction longitudinale de ce dernier du module de position de porte (12).

3. Sous-châssis selon la revendication 2, **caractérisé en ce que** le module de châssis inséré (19) comprend une traverse (4) et deux éléments longitudinaux (2, 3) qui s'étendent dans la même direction l'un l'autre et sont chacun fixés à la traverse sensiblement à la même distance à partir de leurs extrémités respectives de la traverse.

4. Sous-châssis selon l'une quelconque des revendications 1 à 3, **caractérisé en ce que** le module de position de porte (12) est conçu pour être apte à être fixé aux modules de sous-châssis contigus en deux emplacements situés à rotation à 180° l'un de l'autre dans le plan du sous-châssis pour permettre au module de position de porte d'être utilisé quel que soit si oui ou non la porte est située sur le côté gauche ou droit de l'autobus.

5. Sous-châssis selon la revendication 4, **caractérisé en ce que** le module de position de porte (12) est une image spéculaire symétrique par rapport à un plan vertical transversal d'un sous-châssis qui s'étend horizontalement.

6. Sous-châssis selon l'une quelconque des revendications précédentes, **caractérisé en ce que** le module de sous-châssis avant (11) comprend une traverse (4) et des éléments longitudinaux (2', 2", 3', 3") qui sont reliés à ladite traverse et font saillie de celle-ci à la fois vers l'avant et vers l'arrière.

7. Sous-châssis selon l'une quelconque des revendications précédentes, **caractérisé en ce que** le module de position de porte (12) comprend trois traverses (13-15) mutuellement espacées dans la direction longitudinale le long de deux éléments longitudinaux, **en ce que** les deux traverses situées les plus éloignées l'une de l'autre (13, 15) ont des parties d'extrémité mutuellement opposées qui chacune s'étendent au-delà de leur élément longitudinal respectif afin de définir la largeur du sous-châssis et **en ce que** la traverse médiane (14) a une de ses extrémités se terminant au niveau des extrémités proches des deux autres traverses et a son autre extrémité se terminant à l'élément longitudinal (3) situé le plus éloigné à partir de la première extrémité nommée, formant ainsi un espace (16) pour une porte ou un accès de porte entre les deux les plus éloignées desdites trois traverses et le dernier élément longitudinal mentionné.

8. Sous-châssis selon l'une quelconque des revendications précédentes, **caractérisé en ce qu'**il comprend un module d'un cinquième type, à savoir un module d'accès de porte (20, 21) conçu pour être fixé par l'intermédiaire d'interfaces fixes aux éléments longitudinaux et/ou traverses dudit module de position de porte (12).

9. Sous-châssis selon l'une quelconque des revendications précédentes, **caractérisé en ce que** les éléments (2, 3, 4, 13-15) fixés conjointement avec un et même module sont soudés rigidement conjointement.

10. Sous-châssis selon l'une quelconque des revendications précédentes, **caractérisé en ce que** lesdits modules constitutifs (11, 12, 17, 19, 20, 21) du sous-châssis sont fixés conjointement par des liaisons soudées ou filetées.

11. Système modulaire pour construire un sous-châssis pour autobus avec un châssis surbaissé, destiné à être fixé à l'avant soit par l'intermédiaire d'un module de châssis avant (5) à un carter de roue avant d'un autobus ou à une articulation d'un autobus dit articulé et à l'arrière soit par l'intermédiaire d'un module de châssis arrière (7) à un carter de roue arrière d'un autobus ou à une articulation d'un autobus dit articulé, **caractérisé en ce qu'**il comprend au moins trois modules de sous-châssis, à savoir :
• un module de sous-châssis avant (11) avec des éléments longitudinaux et des moyens (10) pour fixer ce module audit module ou articulation de châssis avant,
• un module de position de porte (12) avec des éléments longitudinaux et des traverses qui relient lesdits éléments longitudinaux et sont mutuellement agencés pour définir un emplacement pour appliquer une porte pour la montée et la descente à partir de l'autobus,
• un module de sous-châssis arrière (17) avec des éléments longitudinaux et des moyens (18) pour fixer ce module audit module ou articulation de châssis arrière,
et **en ce que** chacun de ces trois modules de sous-châssis est conçu pour être fixé par l'intermédiaire d'interfaces fixes aux éléments longitudinaux et/ou traverses d'autres modules de sous-châssis afin de former ledit sous-châssis.

12. Système modulaire selon la revendication 11, **caractérisé en ce qu'**il comprend aussi au moins un module d'un quatrième type, à savoir un module de châssis inséré (19) avec des éléments longitudinaux (2, 3) et au moins une traverse (4) reliant lesdits éléments longitudinaux et **en ce qu'**un tel module de châssis inséré est conçu pour être fixé par l'intermédiaire d'interfaces fixes aux éléments longitudinaux et/ou traverses d'autres modules de sous-châssis afin d'aider à définir la longueur du sous-châssis et l'emplacement dans la direction longitudinale de ce dernier du module de position de porte (12).

13. Système modulaire selon la revendication 11 ou 12, **caractérisé en ce qu'**il comprend au moins un module d'un cinquième type, à savoir un module d'accès de porte (20, 21) conçu pour être fixé par l'intermédiaire d'interfaces fixes aux éléments longitudinaux et/ou traverses du module de position de porte (12).

14. Procédé pour fabriquer un sous-châssis pour autobus avec un châssis surbaissé destiné à être fixé à l'avant soit par l'intermédiaire d'un module de châssis avant (5) à un carter de roue avant d'un autobus ou à une articulation d'un autobus dit articulé et à l'arrière soit par l'intermédiaire d'un module de châssis arrière (7) à un carter de roue arrière d'un autobus ou à une articulation d'un autobus dit articulé, ledit sous-châssis étant constitué d'éléments longitudinaux et de traverses qui sont situées sensiblement dans le même plan, s'étendent sensiblement perpendiculairement auxdits éléments longitudinaux et sont fixées auxdits éléments longitudinaux, **caractérisé en ce que** le sous-châssis est formé en fixant conjointement au moins trois modules de sous-châssis, à savoir :
• un module de sous-châssis avant (11) avec des éléments longitudinaux et des moyens (10) pour fixer ce module audit module ou articulation de châssis avant,
• un module de position de porte (12) avec des éléments longitudinaux et des traverses qui relient lesdits éléments longitudinaux et sont mutuellement agencés pour définir un emplacement pour appliquer une porte pour la montée et la descente à partir de l'autobus,
• un module de sous-châssis arrière (17) avec des éléments longitudinaux et des moyens (18) pour fixer ce module audit module ou articulation de châssis arrière, chacun de ces trois modules de sous-châssis étant fixé par l'intermédiaire d'interfaces fixes aux éléments longitudinaux et/ou traverses des autres modules de sous-châssis du sous-châssis.

15. Procédé selon la revendication 14, **caractérisé en ce qu'**au moins un module d'un quatrième type, à savoir un module de châssis inséré (19) avec des éléments longitudinaux (2, 3) et au moins une traverse (4) qui relie lesdits éléments longitudinaux est fixé par l'intermédiaire d'interfaces fixes aux éléments longitudinaux et/ou traverses d'autres modules de sous-châssis pour aider à définir la longueur du sous-châssis et l'emplacement dans la direction longitudinale de ce dernier du module de position de porte (12).

16. Procédé selon la revendication 14 ou 15, **caractérisé en ce qu'**un module d'un cinquième type, à savoir un module d'accès de porte (20, 21) est fixé par l'intermédiaire d'interfaces fixes aux éléments longitudinaux et/ou traverses du module de position de porte (12).

17. Autobus avec un châssis surbaissé, comprenant un sous-châssis (1) selon l'une quelconque des revendications 1 à 10.
